# EUROPEAN PATENT APPLICATION

(11) **EP 1 493 760 A1**
(43) Date of publication of application: **05.01.2005**
(21) Application number: 03102024.1
(22) Date of filing: 04.07.2003
(51) Int. Cl.: C08F 210/06, C08F 4/642, C08F 4/76

(54) **Styrene copolymerisation process**

(71) Applicant: TOTAL PETROCHEMICALS RESEARCH FELUY, 7181 Seneffe (Feluy) (BE)
(72) Inventor: Razavi, Abbas, B-7000, Mons (BE)
(74) Representative: Leyder, Francis

(57) **Abstract**

Provided is a method for the production of a co-polymer of styrene and a further olefin monomer, which method comprises co-polymerising styrene and the further monomer in the presence of a metallocene catalyst, wherein the metallocene catalyst comprises a metallocene having the following formula (I):

R"(CpRₘ)(FluR'ₙ)MQ₂ (I)

wherein Cp comprises a cyclopentadienyl ring; Flu comprises a fluorenyl ring; R" comprises a structural bridge imparting stereorigidity to the component; each R is the same or different and is an organic group; m is an integer of from 0-4; each R' is the same or different and is an organic group; n is an integer of from 0-8; M is a metal atom from group IVB of the Periodic Table or is vanadium; and each Q is a hydrocarbon having from 1-20 carbon atoms or is a halogen; or the formula (II):

R"(FluR_{q})XMQₚ (II)

wherein Flu is a substituted or unsubstitutcd fluorcnyl ring; R" is a structural bridge between Flu and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; q is an integer from 0-8; X is a heteroatom from group VA or group VIA; M is a metal atom from group IIIB, IVB, VB or VIB in any of its theoretical oxidation states; and each Q is a hydrocarbon having from 1-20 carbon atoms or is a halogen; p is an integer which is the oxidation state of M minus 2; and wherein the FluR_{q} group is preferably symmetrically substituted.

## Description

The present invention relates to a process for the production of a co-polymer, in particular a co-polymer comprising styrene units and units of another olefin monomer. The co-polymer produced according to the present method is generally a random co-polymer which is crystalline and easily processible.

In the past, attempts have been made to produce random olefin polymers using metallocene catalysts. In Angew. Chem. Int. Ed. 1998, Vol. 37, No. 7, pages 922-925, Leclerc and Waymouth describe metallocene compounds having a cyclopentadiene ligand (Cp) and a fluorene ligand (Flu), which can be used in the co-polymerisation of ethene and propylene. In particular, zirconium metallocene catalysts comprising unsubstituted Cp, 3-methyl Cp, 3-*tert*-butyl Cp and 3,4-dimethyl Cp ligands are disclosed. These catalysts are only partially successful in producing random polymers, and a significant degree of randomisation always remains in polymer products produced using these catalysts.

Metallocene catalysts are known to be useful in various polymerisation processes. For example, in EP 0581236, specific metallocene catalysts are described as being useful for the production of isotactic polypropylene (iPP).

However, up to present methods for producing olefin-styrene co-polymers are not entirely satisfactory, particularly in slurry processes. This is due to the nature of styrene, which is difficult to polymerise in this way. Styrene is very reactive, when compared with most other commonly used monomers (such as ethylene and propylene) and tends to polymerise with itself before any co-monomer can be incorporated into the polymer. Thus, previous attempts to produce styrene co-polymers have succeeded only in producing mixtures of polystyrene with another polymer, or polystyrene with a very small co-monomer content. There is thus still a need for an improved method of forming olefin-styrene co-polymers, especially random olefin styrene polymers where the styrene and its co-monomer are incorporated randomly (or quasi-randomly, such as in an alternating fashion) throughout the co-polymer.

A further problem is that known random polymers have retained a large amount of solubles (extractables). These are low molecular weight highly co-polymerised species. This was a problem with the use of first generation catalysts, such as chromium and Ziegler-Natta catalysts. The solubles migrate to the surface creating a haze in the films, which is a disadvantage for many uses particularly in the food and medical areas.

With a view to overcoming these problems, attempts were made to replace these catalysts with bis-indenyl metallocene catalysts. This lead to much more homogeneous chain compositions. However, it proved difficult and expensive to produce pure racemic bis-indenyl catalysts, and even when this can be achieved, the pure catalysts unavoidably undergo some conversion to their meso derivatives. The meso derivative produces atactic polyolefins which are generally soluble/extractable as discussed above.

Accordingly, it is an object of the present invention to solve the problems associated with the above prior art. It is a further object of the present invention to provide an improved method for the formation of olefin-styrene co-polymers, especially random and quasi-random co-polymers, which polymers have improved properties, such as good crystallinity and easy processibility. It is also an object of the invention to produce olefin-styrene co-polymers having good clarity and transparency characteristics, and a low solubles content. It is a further object of the present invention to provide an improved method for forming olefin-styrene co-polymers having such improved properties.

Thus, the present invention provides a method for the production of a co-polymer of styrene and a further olefin monomer, which method comprises co-polymerising styrene and the further monomer in the presence of a metallocene catalyst, wherein the metallocene catalyst comprises a metallocene having the following formula (I):

R"(CpRₘ)(FluR'ₙ)MQ₂ (I)

wherein Cp comprises a cyclopentadienyl ring; Flu comprises a fluorenyl ring; R" comprises a structural bridge imparting stereorigidity to the component; each R is the same or different and is an organic group; m is an integer of from 0-4; each R' is the same or different and is an organic group; n is an integer of from 0-8; M is a metal atom from group IVB of the Periodic Table or is vanadium; and each Q is a hydrocarbon having from 1-20 carbon atoms or is a halogen;
or the formula (II):

R"(FluR_{q})XMQₚ (II)

wherein Flu is a substituted or unsubstituted fluorenyl ring; R" is a structural bridge between Flu and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; q is an integer from 0-8; X is a heteroatom from group VA or group VIA; M is a metal atom from group IIIB, IVB, VB or VIB in any of its theoretical oxidation states; and each Q is a hydrocarbon having from 1-20 carbon atoms or is a halogen; p is an integer which is the oxidation state of M minus 2; and wherein the FluR_{q} group is preferably symmetrically substituted.

The methods of the present invention involve a process of co-polymerisation. In the context of the present invention, co-polymerisation means polymerising two or more olefin monomers, one of which being a styrene monomer, together in the same reaction zone under polymerisation conditions. It is preferred that the present method involves the co-polymerisation of styrene with one further olefin monomer to form an olefin-styrene co-polymer. However, two, three or more further olefin monomers may be polymerised together with styrene in the present methods, if desired, to form, for example, a terpolymer.

The methods of the present invention are particularly advantageous, since they allow for the production of improved styrene-olefin co-polymers, especially random co-polymers, having good processibility, and high crystallinity and good optical properties, such as low haze and high transparency. The catalysts used in the present invention have no meso form (they are single site catalysts) and do not suffer the problems of producing extractables, or low molecular weight product.

The present invention will now be described in further detail, by way of example only, with reference to the following Figure, in which:

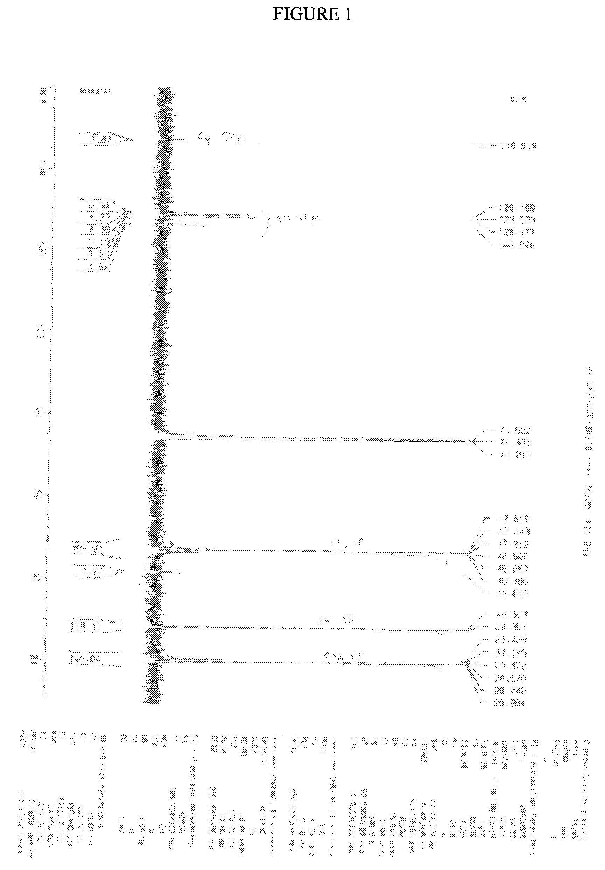

Figure 1 shows a ¹³C NMR spectrum of a styrene-propylene co-polymer, produced using Me₂Si(3,6-^{t}Bu fluorenyl)(^{t}BuN) TiCl₂ showing the co-polymeric nature of the product and the relative proportion of each monomer incorporated in the product.

The substituents that may be present on the cyclopentadiene and fluorene rings (R and R' respectively) will now be described in more detail. The substituent or substituents are not particularly limited. The cyclopentadiene ring (Cp) may be unsubstituted, but is preferably at least mono-substituted. If desired, it may comprise one or more further substituents, provided that these further substituents do not adversely interfere with the ability of the present method to produce random olefin co-polymers. The Cp ring may be substituted with the same substituent throughout, or with different substituents. The fluorene ring (Flu) may be substituted or unsubstituted and may also be substituted with the same substituent throughout, or with different substituents.

The substituents on the Cp and Flu rings are not particularly limited and may comprise any organic group and/or one or more atoms from any of groups IIIA, IVA, VA, VIA or VIIA of the Periodic Table, such as a B, Si, N, P, O, or S atom or a halogen atom (e.g. F, Cl, Br or I).

When the substituent comprises an organic group, the organic group preferably comprises a hydrocarbon group. The hydrocarbon group may comprise a straight chain, a branched chain or a cyclic group. Independently, the hydrocarbon group may comprise an aliphatic or an aromatic group. Also independently, the hydrocarbon group may comprise a saturated or unsaturated group.

When the hydrocarbon comprises an unsaturated group, it may comprise one or more alkene functionalities and/or one or more alkyne functionalities. When the hydrocarbon comprises a straight or branched chain group, it may comprise one or more primary, secondary and/or tertiary alkyl groups. When the hydrocarbon comprises a cyclic group it may comprise an aromatic ring, an aliphatic ring, a heterocyclic group, and/or fused ring derivatives of these groups. The cyclic group may thus comprise a benzene, naphthalene, anthracene, indene, fluorene, pyridine, quinoline, thiophene, benzothiophene, furan, benzofuran, pyrrole, indole, imidazole, thiazole, and/or an oxazole group, as well as regioisomers of the above groups.

The number of carbon atoms in the hydrocarbon group is not especially limited, but preferably the hydrocarbon group comprises from 1-40 C atoms. The hydrocarbon group may thus be a lower hydrocarbon (1-6 C atoms) or a higher hydrocarbon (7 C atoms or more, e.g. 7-40 C atoms). The number of atoms in the ring of the cyclic group is not especially limited, but preferably the ring of the cyclic group comprises from 3-10 atoms, such as 3, 4, 5, 6 or 7 atoms.

The groups comprising heteroatoms described above, as well as any of the other groups defined above, may comprise one or more heteroatoms from any of groups IIIA, IVA, VA, VIA or VIIA of the Periodic Table, such as a B, Si, N, P, O, or S atom or a halogen atom (e.g. F, Cl, Br or I). Thus the substituent may comprise one or more of any of the common functional groups in organic chemistry, such as hydroxy groups, carboxylic acid groups, ester groups, ether groups, aldehyde groups, ketone groups, amine groups, amide groups, imine groups, thiol groups, thioether groups, sulphate groups, sulphonic acid groups, and phosphate groups etc. The substituent may also comprise derivatives of these groups, such as carboxylic acid anhydrydes and carboxylic acid halides.

In addition, any substituent may comprise a combination of two or more of the substituents and/or functional groups defined above.

Typically, the substituents are independently selected from an aryl group and a hydrocarbyl group having from 1-20 carbon atoms. The most preferred substituents are methyl groups. Other preferred substituents include Et, n-Pr, i-Pr, n-Bu, t-Bu, Me₃Si, R-O, cycloalkyl, and halogen.

In respect of the Cp ring, it is especially preferred that at least one group R comprises a bulky group of the formula ZR*₃ in which Z is an atom from group IVA of the Periodic Table and each R* is the same or different and is chosen from a hydrogen or a hydrocarbyl group having from 1-20 carbon atoms. When such an R group is present, it is also preferred that at least one further group R is present comprising a group of the formula YR#₃ in which Y is an atom from group IVA of the Periodic Table, and each R# is the same or different and is chosen from a hydrogen or a hydrocarbyl group having from 1-7 carbon atoms.

Regarding the position of the substituents, generally at least one group R is positioned on the cyclopentadienyl ring such that it is distal to the bridge R". However, in some embodiments of the invention at least one group R is positioned on the cyclopentadienyl ring such that it is proximal to the bridge R". It is particularly preferable that the cyclopentadienyl ring comprises a bulky substituent ZR*₃ distal to the bridge R" and a substituent YR#₃ proximal to the bridge and non-vicinal to ZR*₃. In some embodiments of the present invention, the cyclopentadienyl ring comprises a substituent ZR*₃ distal to the bridge R"; a substituent YR#₃ proximal to the bridge R" and non-vicinal to ZR^{*}₃; and a further substituent YR#₃ proximal to the bridge and vicinal to ZR*₃. The cyclopentadienyl ring may also comprise two substituents ZR*₃, each distal to the bridge R", if desired.

In a preferred embodiment, Z and Y in the above formulae independently comprise carbon or silicon. The catalyst compounds used in the present method are typically compounds in which ZR*₃ is selected from C(CH₃)₃, C(CH₃)₂Ph, CPh₃, and Si(CH₃)₃. It is particularly preferred that ZR*₃ comprises C(CH₃)₃. In further preferred embodiments of the present invention, YR#₃ comprises a methyl group or a trimethylsilyl group (TMS)

The substitution pattern of the fluorene ring (on both types of catalyst I and II) is not especially limited, provided that it does not adversely interfere with the co-polymerisation method of the present invention. The fluorine ring generally comprises a substituent at the 3-position or at the 6-position. Most preferably both the 3- and the 6-position are substituted in catalysts of type (I), and of type (II). Alternatively the fluorine ring comprises a substituent at the 2-position and/or at the 7-position. Most preferably both the 2- and the 7-position are substituted in catalysts of both types (I) and (II).

In respect of catalysts of type (II), it is preferred that the group X is an atom from group VA of the periodic table, particularly N or P. When X is from group VIA it will be apparent that X is not further substituted. However, when X is from group VA, it will be apparent that X will be further substituted to make up the required valence of the N or P atom. In this instance, further substitution may be any hydrocarbon group already discussed above. Most preferably however, the group is a bulky group, such as a tertiary butyl group.

The catalysts of type (II) most preferably have the following structure: 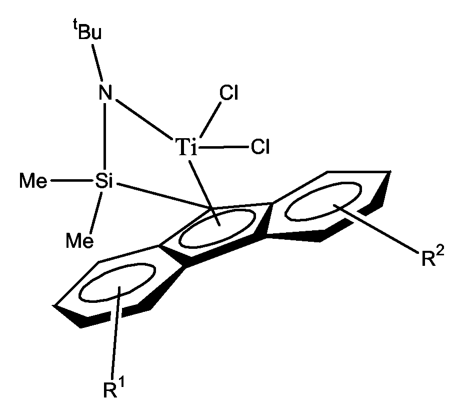 wherein R¹ and R² are substituents at both the 2- and 7-positions, or both the 3- and 6-positions of the fluorenyl group, and are bulky groups of the formula ZR*₃ in which Z is an atom from group IVA of the Periodic Table and each R* is the same or different and is chosen from a hydrogen or a hydrocarbyl group having from 1-20 carbon atoms.

In the more preferred embodiments, R¹ and R² are both ^{t}Bu groups. It is particularly preferred that these ^{t}Bu groups are in the 3-position and the 6-position.

The type of bridge present between the rings in the above-described catalysts is not itself particularly limited. Typically R" comprises an alkylidene group having 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent comprises a silyl radical or a hydrocarbyl radical having at least one carbon atom to form the bridge, such as a substituted or unsubstituted ethylenyl radical (e.g. -CH₂CH₂-). Most preferably R" is isopropylidene (Me₂C), Ph₂C, ethylenyl, or Me₂Si.

It is further preferred that the metallocene compounds used in the present invention are those wherein M is Ti, Zr, or Hf. Typically, the Q groups attached to the metal atoms are halogen atoms, such as Cl.

The further olefin employed in the present invention is not particularly limited, and may be any olefin. Suitable olefins include ethylene, propylene, butene, pentene and hexene. Preferably the olefin is an α-olefin. It is also preferred that the olefin has 3 or more carbon atoms. The most preferable olefin is propylene.

In addition to the above metallocene compound, the catalyst used in the present methods may comprise one or more activating agents capable of activating any one or more of the catalyst components. Typically, the activating agent comprises an aluminium- or boron-containing activating agent.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (I): 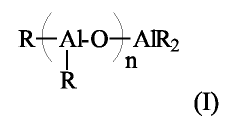 for oligomeric linear alumoxanes; and formula (II) 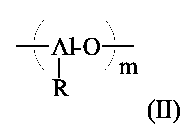 for oligomeric cyclic alumoxanes, wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Suitable boron-containing activating agents may comprise a triphenylcarbenium boronate, such as tetrakis-pentafluorophenyl-borato-triphenylcarbenium as described in EP-A-0427696: 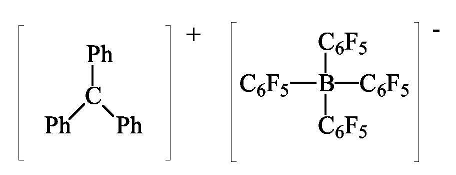 or those of the general formula below, as described in EP-A-0277004 (page 6, line 30 to page 7, line 7):

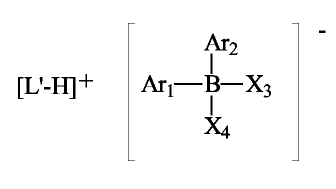

Other preferred activating agents include hydroxy isobutylaluminium and a metal aluminoxinate. These are particularly preferred when at least one Q in the general formula for metallocenes comprises an alkyl group.

The catalyst systems employed in the present invention may be employed in any type of co-polymerisation method, provided that the required catalytic activity is not impaired. In a preferred embodiment of the present invention, the catalyst system is employed in a solution polymerisation process, which is homogeneous, or a slurry process, which is heterogeneous. In a solution process, typical solvents include hydrocarbons having 4-7 carbon atoms such as heptane, toluene or cyclohexane. In a slurry process, it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials that are desirably employed in accordance with this invention include group IIA, IIIA, IVA, or IVB metal oxides such as silica, alumina and mixtures thereof. Other inorganic oxides that may be employed, either alone or in combination with the silica or alumina, are magnesia, titania, zirconia, and the like. Other suitable support materials, however, can be employed, for example, finely divided functionalised polyolefins such as finely divided polyethylene.

Preferably, the support is a silica support having a surface area of from 200-700 m²/g and a pore volume of from 0.5-3 ml/g.

The amount of activating agent and metallocene usefully employed in the preparation of the solid support catalyst can vary over a wide range. Preferably, the activating agent to transition metal mole ratio is in the range between 1:1 and 100:1, preferably in the range 5:1 and 50:1.

The order of addition of the catalyst components and activating agent to the support material can vary. In accordance with a preferred embodiment of the present invention activating agent dissolved in a suitable inert hydrocarbon solvent is added to the support material slurried in the same or other suitable hydrocarbon liquid and thereafter a mixture of the catalyst components is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenzene and diethylbenzene.

Preferably, the support material is slurried in toluene and the catalyst components and activating agent are dissolved in toluene prior to addition to the support material.

The present invention further provides use of a metallocene catalyst for producing a co-polymer of styrene and a further olefin monomer, wherein the metallocene catalyst comprises a metallocene having the following formula (I):

R"(CpRₘ)(FluR'ₙ)MQ₂ (I)

wherein Cp comprises a cyclopentadienyl ring; Flu comprises a fluorenyl ring; R" comprises a structural bridge imparting stereorigidity to the component; each R is the same or different and is an organic group; m is an integer of from 0-4; each R' is the same or different and is an organic group; n is an integer of from 0-8; M is a metal atom from group IVB of the Periodic Table or is vanadium; and each Q is a hydrocarbon having from 1-20 carbon atoms or is a halogen;
or the formula (II):

R"(FluR_{q})XMQ (II)

wherein Flu is a substituted or unsubstituted fluorenyl ring; R" is a structural bridge between Flu and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; q is an integer from 0-8; X is a heteroatom from group VA or group VIA; M is a metal atom from group IIIB, IVB, VB or VIB in any of its theoretical oxidation states; and each Q is a hydrocarbon having from 1-20 carbon atoms or is a halogen; and wherein the FluR_{q} group is preferably symmetrically substituted.

Also provided is a co-polymer, obtainable according to the methods defined above. The co-polymer is preferably a styrene-propylene co-polymer in which there is reasonably even distribution of the styrene and propylene units throughout each polymer molecule so that large blocks of each monomer unit do not form. Without being bound by theory, it is thought that this provides the polymer with its advantageous crystallinity, optical properties and processibility.

Applications for which the polymers of the present invention are particularly suited include films and impact co-polymers.

The present invention will now be described in further detail, by way of example only, with reference to the following specific embodiments.

### Example

In order to demonstrate the utility of the catalysts and methods of the present invention, a styrene-propylene co-polymer was produced in a standard polymerisation procedure, using Me₂Si(3,6-^{t}Bu fluorenyl)(^{t}BuN) TiCl₂: 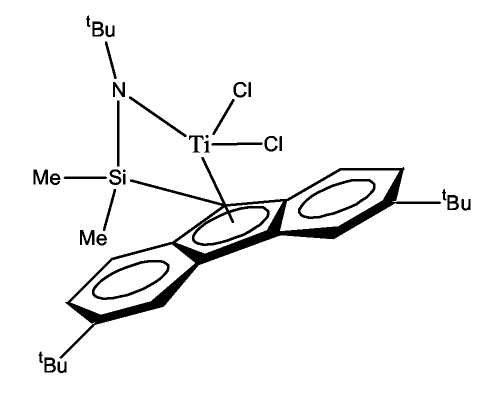 The final polymer proved to be a genuine co-polymer of propylene and styrene, comprising approximately 10 % (from 9-11%) styrene by weight. Such polymers could not be produced in the past.

The composition of the co-polymer was confirmed by 1H and 13C NMR spectroscopy. The 13C NMR spectrum for the product is depicted in Figure 1, showing the co-polymeric nature of the product and the relative proportion of each monomer incorporated in the product.

## Claims

1. A method for the production of a co-polymer of styrene and a further olefin monomer, which method comprises co-polymerising styrene and the further monomer in the presence of a metallocene catalyst, wherein the metallocene catalyst comprises a metallocene having the following formula (I):
R"(CpRₘ)(FluR'ₙ)MQ₂ (I)
wherein Cp comprises a cyclopentadienyl ring; Flu comprises a fluorenyl ring; R" comprises a structural bridge imparting stereorigidity to the component; each R is the same or different and is an organic group; m is an integer of from 0-4; each R' is the same or different and is an organic group; n is an integer of from 0-8; M is a metal atom from group IVB of the Periodic Table or is vanadium; and each Q is a hydrocarbon having from 1-20 carbon atoms or is a halogen;
or the formula (II):
R"(FluR_{q})XMQₚ (II)
wherein Flu is a substituted or unsubstituted fluorenyl ring; R" is a structural bridge between Flu and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; q is an integer from 0-8; X is a heteroatom from group VA or group VIA; M is a metal atom from group IIIB, IVB, VB or VIB in any of its theoretical oxidation states; and each Q is a hydrocarbon having from 1-20 carbon atoms or is a halogen; p is an integer which is the oxidation state of M minus 2; and wherein the FluR_{q} group is preferably symmetrically substituted.

2. A method according to claim 1, wherein at least one group R in formula (I) is positioned on the cyclopentadienyl such that it is distal to the bridge R", which group R comprises a bulky group of the formula ZR*₃ in which Z is an atom from group IVA of the Periodic Table and each R* is the same or different and is chosen from a hydrogen or a hydrocarbyl group having from 1-20 carbon atoms.

3. A method according to claim 2, wherein the cyclopentadienyl ring of formula (I) comprises a substituent ZR*₃ distal to the bridge R" and a substituent YR#₃ proximal to the bridge and non-vicinal to ZR*₃, wherein Y is an atom from group IVA of the Periodic Table, and each R# is the same or different and is chosen from a hydrogen or a hydrocarbyl group having from 1-7 carbon atoms.

4. A method according to claim 2 or claim 3, wherein Z and/or Y comprises carbon or silicon.

5. A method according to claim 4, wherein ZR*₃ comprises C(CH₃)₃ and/or YR#₃ comprises CH₃.

6. A method according to claim 1, wherein X in formula (II) is N or P.

7. A method according to any preceding claim, wherein the fluorine ring in formula (I) or formula (II) comprises a substituent at the 3-position and/or at the 6-position, or a substituent at the 2-position and/or at the 7-position.

8. A method according to any preceding claim, wherein R" comprises an alkylidene group having 1 to 20 carbon atoms, a germanium group, a silicon group, a siloxane group, an alkyl phosphine group, or an amine group.

9. A method according to claim 8, wherein R" comprises a substituted or unsubstituted ethylenyl group, an isopropylidene (Me₂C) group, a Ph₂C group, or a Me₂Si group.

10. A method according to any preceding claim, wherein M is Ti, Zr, or Hf.

11. A method according to any preceding claim, wherein the catalyst has the following structure: 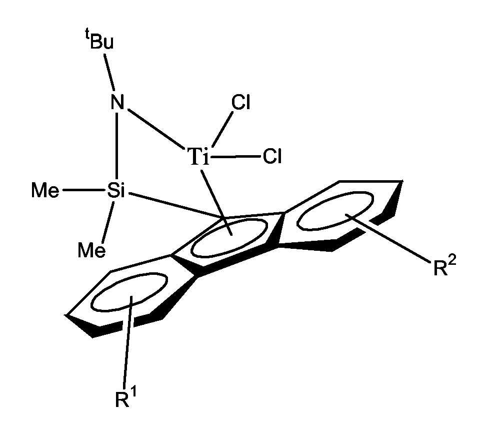 wherein R¹ and R² are substituents at both the 2- and 7-positions, or both the 3- and 6-positions of the fluorenyl group, and are bulky groups of the formula ZR*₃ in which Z is an atom from group IVA of the Periodic Table and each R* is the same or different and is chosen from a hydrogen or a hydrocarbyl group having from 1-20 carbon atoms.

12. A method according to claim 11, wherein R¹ and R² are both ^{t}Bu groups.

13. A method according to any preceding claim, wherein the further olefin monomer is propylene.

14. Use of a metallocene catalyst for producing a co-polymer of styrene and a further olefin monomer, wherein the metallocene catalyst comprises a metallocene having the following formula (I):
R"(CpRₘ)(FluR'ₙ)MQ₂ (I)
wherein Cp comprises a cyclopentadienyl ring; Flu comprises a fluorenyl ring; R" comprises a structural bridge imparting stereorigidity to the component; each R is the same or different and is an organic group; m is an integer of from 0-4; each R' is the same or different and is an organic group; n is an integer of from 0-8; M is a metal atom from group IVB of the Periodic Table or is vanadium; and each Q is a hydrocarbon having from 1-20 carbon atoms or is a halogen;
or the formula (II):
R"(FluR_{q})XMQₚ (II)
wherein Flu is a substituted or unsubstituted fluorenyl ring; R" is a structural bridge between Flu and X imparting stereorigidity to the component; each R is the same or different and is selected from a hydrocarbyl group having from 1-20 carbon atoms, a halogen, an alkoxy group, an alkoxyalkyl group, an alkylamino group or an alkylsilylo group; q is an integer from 0-8; X is a heteroatom from group VA or group VIA; M is a metal atom from group IIIB, IVB, VB or VIB in any of its theoretical oxidation states; and each Q is a hydrocarbon having from 1-20 carbon atoms or is a halogen; p is an integer which is the oxidation state of M minus 2; and wherein the FluR_{q} group is preferably symmetrically substituted.

15. Use according to claim 14, wherein the metallocene compound is a compound as defined in any of claims 2-12.

16. Use according to claim 14 or claim 15, wherein the further olefin monomer is propylene.

17. A co-polymer, formed from styrene and a further olefin monomer, obtainable according to a method as defined in any of claims 1-13.

18. A co-polymer according to claim 17, which co-polymer is a substantially random co-polymer, or a block co-polymer.

19. A co-polymer according to claim 17 or claim 18, which co-polymer comprises from 5-50 wt.% of styrene.

20. A co-polymer according to any of claims 17-19, wherein the further olefin monomer is propylene.
